# EUROPEAN PATENT APPLICATION

(11) **EP 4 734 222 A1**
(43) Date of publication of application: **29.04.2026**
(21) Application number: 23951356.7
(22) Date of filing: 07.12.2023
(51) Int. Cl.: H01M 10/44

(54) **BATTERY CAPACITY ACTIVATION METHOD AND APPARATUS, AND ELECTRONIC DEVICE AND STORAGE MEDIUM**

(30) Priority: 05.09.2023 CN 202311142943
(71) Applicant: Eve Power Co., Ltd., Jingmen, Hubei 448000 (CN)
(72) Inventor: QIN, Lang, Hubei 448000 (CN); DING, Jing, Hubei 448000 (CN); CHEN, Ruijun, Hubei 448000 (CN)
(74) Representative: Nederlandsch Octrooibureau
(86) International application number: PCT/CN2023/137278
(87) International publication number: WO 2025/050543

(57) **Abstract**

Provided are a method and an apparatus for activating battery capacity, an electronic device, and a storage medium. By charging the battery to a smaller cutoff current, discharging it to a higher SOC, and performing charge/discharge cycling during a constant voltage charging phase, the method establishes a lithium ion path in the battery, activates lithium intercalation sites in the negative electrode, and activates some inert lithium ions in the positive electrode during a charging and discharging process, eliminating battery capacity ramp-up, and increasing the battery capacity.

## Description

This application claims priority to Chinese patent application No. 202311142943.3, filed with China National Intellectual Property Administration on September 5, 2023, the entire contents of which are incorporated herein by reference.

### FIELD

The present disclosure relates to the field of battery technologies, and more particularly, to a method and an apparatus for activating battery capacity, an electronic device, and a storage medium.

### BACKGROUND

Lithium-ion batteries have been widely used in energy storage, passenger vehicle, and commercial vehicle fields due to their advantages such as excellent cycle life, wide operating temperature range, short charging time, high environmental performance, high safety, and relatively simple assembly. To enhance product competitiveness, researchers often increase the compaction density of the positive electrode to improve the energy density of lithium-ion batteries. Correspondingly, the compaction density of the negative electrode is increased to accommodate more lithium ions. However, high compaction density results in insufficient electrolyte wetting, increased electrode plate resistance, and difficulty in the process of lithium ions deintercalating from the positive electrode and intercalating into the negative electrode. In this case, the battery needs to undergo 30 cycles or more to gradually ramp up and exert its maximum capacity, with a capacity ramp-up rate of 5% to 8%.

In the related art, to reduce the capacity ramp-up rate of batteries, the capacity ramp-up rate of lithium-ion batteries with high compaction density of positive and negative electrodes is usually improved. However, this method of improving the high compaction density of positive and negative electrodes has drawbacks such as high research and development costs and long research and development time. In addition, it is necessary to consider the selection and processing of raw materials and verify design parameters of the battery, which makes it difficult for the battery capacity to be quickly exerted, reducing an activation efficiency of the battery capacity.

### SUMMARY

### TECHNICAL PROBLEM

Embodiments of the present disclosure provide a method and an apparatus for activating battery capacity, an electronic device, and a storage medium, which can improve a technical problem that the battery capacity is difficult to be rapidly exerted.

### TECHNICAL SOLUTION

To achieve this objective, the present disclosure adopts the following technical solutions.

In a first aspect, the embodiments of the present disclosure provide a method for activating battery capacity. The method includes: performing, at a predetermined ambient temperature, constant current charging on a to-be-activated battery at a first predetermined current rate until a voltage of the to-be-activated battery reaches a charging cutoff voltage V1 of the to-be-activated battery, the first predetermined current rate being less than or equal to a maximum continuous charging current C of the to-be-activated battery; performing constant voltage charging on the to-be-activated battery at the charging cutoff voltage V1 until a current of the to-be-activated battery reaches a predetermined cutoff current, the predetermined cutoff current being less than or equal to 0.2 times the maximum continuous charging current C of the to-be-activated battery; allowing the to-be-activated battery to stand at the predetermined ambient temperature for a first predetermined duration; performing constant current discharging on the to-be-activated battery at a second predetermined current rate to discharge an electric quantity defined as a predetermined percentage SOC, the second predetermined current rate being less than or equal to the maximum continuous charging current C of the to-be-activated battery, and the predetermined percentage SOC being less than 10% SOC; and allowing the to-be-activated battery to stand at the predetermined ambient temperature for a second predetermined duration, and performing a preset number of cycles each consisting of the operation of said performing, at the predetermined ambient temperature, the constant current charging on the to-be-activated battery at the first predetermined current rate until the voltage of the to-be-activated battery reaches the charging cutoff voltage V1 of the to-be-activated battery to the operation of said performing the constant current discharging on the to-be-activated battery at the second predetermined current rate to discharge the electric quantity defined as the predetermined percentage SOC.

In a second aspect, the embodiments of the present disclosure provide an apparatus for activating a battery capacity. The apparatus includes: a first charging module configured to perform, at a predetermined ambient temperature, constant current charging on a to-be-activated battery at a first predetermined current rate until a voltage of the to-be-activated battery reaches a charging cutoff voltage V1 of the to-be-activated battery, the first predetermined current rate being less than or equal to a maximum continuous charging current C of the to-be-activated battery; a second charging module configured to perform constant voltage charging on the to-be-activated battery at the charging cutoff voltage V1 until a current of the to-be-activated battery reaches a predetermined cutoff current, the predetermined cutoff current being less than or equal to 0.2 times the maximum continuous charging current C of the to-be-activated battery; a first standing module configured to allow the to-be-activated battery to stand at the predetermined ambient temperature for a first predetermined duration; a discharging module configured to perform constant current discharging on the to-be-activated battery at a second predetermined current rate to discharge an electric quantity defined as a predetermined percentage SOC, the second predetermined current rate being less than or equal to the maximum continuous charging current C of the to-be-activated battery, and the predetermined percentage SOC being less than 10% SOC; a second standing module configured to allow the to-be-activated battery to stand at the predetermined ambient temperature for a second predetermined duration; and a cycle execution module configured to perform a preset number of cycles each consisting of the operation performed by the first charging module to the operation performed by the second standing module.

In a third aspect, the embodiments of the present disclosure provide an electronic device. The electronic device includes: one or more processors; a memory; and one or more application programs stored in the memory and configured to be executed by the one or more processors to implement the method for activating the battery capacity according to any one of embodiments in the first aspect.

In a fourth aspect, the embodiments of the present disclosure provide a computer-readable storage medium having a computer program stored thereon. The computer program, when executed by a processor, implements the method for activating the battery capacity according to any one of embodiments in the first aspect.

### BENEFICIAL EFFECT

Beneficial effects of the present disclosure are as follows. In the embodiments of the present disclosure, by charging the battery to a smaller cutoff current, discharging it to a higher SOC, and performing charge/discharge cycling during a constant voltage charging phase, a lithium ion path in the battery is established, lithium intercalation sites in the negative electrode are activated, and some inert lithium ions in the positive electrode are activated during a charging and discharging process. Therefore, a degree of polarization of the battery during the charging and discharging process is reduced, an electrode mass transfer kinetics process is improved, battery capacity ramp-up is eliminated, and the battery capacity is increased.

### BRIEF DESCRIPTION OF THE DRAWINGS

To clearly explain technical solutions of the embodiments of the present disclosure, drawings used in the description of the embodiments are briefly described below. Obviously, the drawings as described below show merely some embodiments of the present disclosure. Based on these drawings, other drawings can be obtained by those skilled in the art without paying creative efforts.
FIG. 1 is a schematic flowchart of a method for activating battery capacity according to an embodiment of the present disclosure.

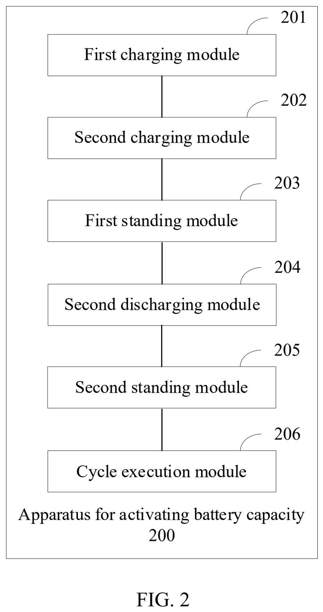

FIG. 2 is a schematic structural diagram of an apparatus for activating battery capacity according to an embodiment of the present disclosure.
FIG. 3 is a schematic diagram of a capacity curve of a certain model of high-capacity prismatic lithium iron phosphate battery according to an embodiment of the present disclosure.

### DETAILED DESCRIPTION OF THE EMBODIMENTS

Technical solutions according to embodiments of the present disclosure will be described clearly and completely below in combination with accompanying drawings of the embodiments of the present disclosure. Obviously, the embodiments described below are only a part of the embodiments of the present disclosure, rather than all embodiments of the present disclosure. On a basis of the embodiments of the present disclosure, all other embodiments obtained by those skilled in the art without creative labor shall fall within the protection scope of the present disclosure. In addition, it should be understood that the specific embodiments described herein are only used to illustrate and explain the present disclosure and are not to limit the present disclosure. In the present disclosure, when not stated to the contrary, the directional terms used such as "upper" and "lower" generally refer to the upper and lower positions of the apparatus in its actual use or operating state, specifically corresponding to the orientation illustrated in the accompanying drawings; while "inner" and "outer" are defined relative to the outline of the apparatus.

The technical solutions of the present disclosure will be further described below with reference to the accompanying drawings and specific embodiments.

The embodiments of the present disclosure provide a method for activating battery capacity. The method includes: performing, at a predetermined ambient temperature, constant current charging on a to-be-activated battery at a first predetermined current rate until a voltage of the to-be-activated battery reaches a charging cutoff voltage V1 of the to-be-activated battery, the first predetermined current rate being less than or equal to a maximum continuous charging current C of the to-be-activated battery; performing constant voltage charging on the to-be-activated battery at the charging cutoff voltage V1 until a current of the to-be-activated battery reaches a predetermined cutoff current, the predetermined cutoff current being less than or equal to 0.2 times the maximum continuous charging current C of the to-be-activated battery; allowing the to-be-activated battery to stand at the predetermined ambient temperature for a first predetermined duration; performing constant current discharging on the to-be-activated battery at a second predetermined current rate to discharge an electric quantity defined as a predetermined percentage SOC, the second predetermined current rate being less than or equal to the maximum continuous charging current C of the to-be-activated battery, and the predetermined percentage SOC being less than 10% SOC; and allowing the to-be-activated battery to stand at the predetermined ambient temperature for a second predetermined duration, and performing a preset number of cycles each consisting of the operation of said performing, at the predetermined ambient temperature, the constant current charging on the to-be-activated battery at the first predetermined current rate until the voltage of the to-be-activated battery reaches the charging cutoff voltage V1 of the to-be-activated battery to the operation of said performing the constant current discharging on the to-be-activated battery at the second predetermined current rate to discharge the electric quantity defined as the predetermined percentage SOC. These steps are explained in detail below.

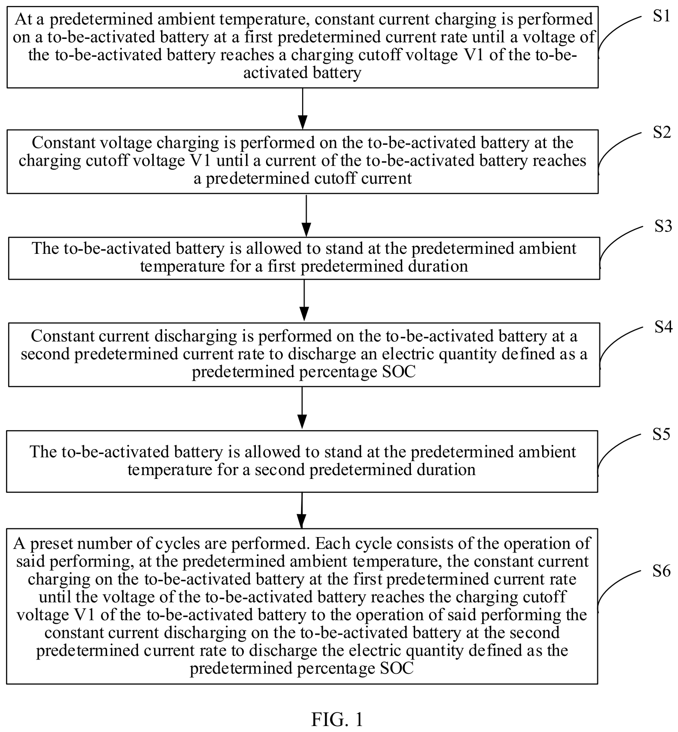

As illustrated in FIG. 1, which is a schematic flowchart of a method for activating battery capacity according to an embodiment of the present disclosure, the method for activating the battery capacity includes the following operations S1 to S6.

At S1, at a predetermined ambient temperature, constant current charging is performed on a to-be-activated battery at a first predetermined current rate until a voltage of the to-be-activated battery reaches a charging cutoff voltage V1 of the to-be-activated battery. The first predetermined current rate is less than or equal to a maximum continuous charging current C of the to-be-activated battery.

The to-be-activated battery is a lithium-ion battery. The predetermined ambient temperature is a preset environmental temperature of a space in which the to-be-activated battery is activated. For example, it may be room temperature (25°C), or it may also be a common temperature in a battery manufacturing process, which achieves activation of the to-be-activated battery without purchasing new device, reducing costs.

When confirming that the to-be-activated battery is in normal use, the corresponding charging cutoff voltage V1, discharging cutoff voltage V2, and maximum continuous charging current C are determined. The first predetermined current rate is less than or equal to the maximum continuous charging current C of the to-be-activated battery.

Specifically, at the predetermined ambient temperature, the constant current charging is performed on the to-be-activated battery at the first predetermined current rate until the voltage of the to-be-activated battery reaches the charging cutoff voltage V1 of the to-be-activated battery. That is, by performing constant current full charging on the to-be-activated battery at a rate less than or equal to the maximum continuous charging current C of the to-be-activated battery at the predetermined ambient temperature, the voltage of the to-be-activated battery is allowed to reach the charging cutoff voltage V1. Since the to-be-activated battery is not overcharged and the first predetermined current rate is less than or equal to the maximum continuous charging current C of the to-be-activated battery, no damage is inflicted to the to-be-activated battery, achieving protection of the to-be-activated battery.

At S2, constant voltage charging is performed on the to-be-activated battery at the charging cutoff voltage V1 until a current of the to-be-activated battery reaches a predetermined cutoff current. The predetermined cutoff current is less than or equal to 0.2 times the maximum continuous charging current C of the to-be-activated battery.

The predetermined cutoff current is less than or equal to 0.2 times the maximum continuous charging current C of the to-be-activated battery. The predetermined cutoff current is relatively small. Exemplarily, the predetermined cutoff current is 0.1C.

Specifically, subsequent to charging the voltage of the to-be-activated battery to the charging cutoff voltage V1 of the to-be-activated battery, the constant voltage charging is continued to be performed on the to-be-activated battery at the charging cutoff voltage V1 until the current of the to-be-activated battery reaches the predetermined cutoff current. The predetermined cutoff current is less than or equal to 0.2 times the maximum continuous charging current C of the to-be-activated battery, ensuring that the to-be-activated battery is not overcharged. In addition, in this embodiment, by performing the constant voltage charging on the to-be-activated battery, subsequent to the constant current charging, at the charging cutoff voltage V1 until the current of the to-be-activated battery reaches the predetermined cutoff current, since the predetermined cutoff current is a relatively small current, an electric quantity of the to-be-activated battery is increased during a charging process, opening gaps for lithium ions in the negative electrode of the to-be-activated battery. Therefore, lithium intercalation sites in the negative electrode are activated, and polarization is reduced, which helps eliminate capacity ramp-up of the to-be-activated battery, ensuring that the to-be-activated battery is not damaged while increasing the battery capacity.

At S3, the to-be-activated battery is allowed to stand at the predetermined ambient temperature for a first predetermined duration.

The first predetermined duration may be 5 minutes, 10 minutes, etc.

Specifically, since a temperature of the to-be-activated battery rises subsequent to charging, allowing the to-be-activated battery to stand at the predetermined ambient temperature for the first predetermined duration can reduce a surface temperature of the to-be-activated battery subsequent to the charging. Also, a polarization voltage generated during the charging can be attenuated through a standing process, which reduces the polarization voltage, lowering a degree of polarization of the to-be-activated battery.

At S4, constant current discharging is performed on the to-be-activated battery at a second predetermined current rate to discharge an electric quantity defined as a predetermined percentage SOC. The second predetermined current rate is less than or equal to the maximum continuous charging current C of the to-be-activated battery, and the predetermined percentage SOC is less than 10% SOC.

SOC stands for State of Charge, also known as remaining electric quantity. It represents a ratio of remaining dischargeable electric quantity of a battery subsequent to a period of use or long-term storage to its fully charged electric quantity, usually expressed as a percentage. The predetermined percentage SOC is less than 10% SOC. Since this predetermined percentage SOC represents the discharged electric quantity, that is, the to-be-activated battery is discharged to more than 90% of its nominal capacity, it is discharging at a higher SOC. Exemplarily, the predetermined percentage SOC may be 5% SOC. The predetermined percentage SOC may be set according to a capacity ramp-up rate of the to-be-activated battery. For example, if the capacity ramp-up rate is around 5%, the corresponding predetermined percentage SOC is 5%.

Specifically, subsequent to charging the to-be-activated battery to the predetermined cutoff current and allowing it to stand, the constant current discharging is performed on the to-be-activated battery at the second predetermined current rate until the discharged electric quantity is the predetermined percentage SOC. That is, the to-be-activated battery is not fully discharged but subjected to discharging at the higher SOC, saving time for battery capacity. In addition, the constant current discharging is performed on the to-be-activated battery at the rate less than or equal to the maximum continuous charging current C of the to-be-activated battery. Since the to-be-activated battery is not over-discharged and the second predetermined current rate is less than or equal to the maximum continuous charging current C of the to-be-activated battery, no damage is inflicted to the to-be-activated battery. In this embodiment, by performing the constant current discharging on the to-be-activated battery at the second predetermined current rate until the discharged electric quantity reaches the predetermined percentage SOC, an activation duration is reduced since the predetermined percentage SOC is a higher SOC, in such a manner that a lithium ion path is established, lithium intercalation sites in the negative electrode are activated, and some inert lithium ions in the positive electrode are activated during a discharging process. Therefore, a degree of polarization of the battery during a charging and discharging process is reduced, which helps eliminate the capacity ramp-up of the to-be-activated battery, ensuring that the to-be-activated battery is not damaged while increasing the battery capacity.

It should be noted that, the capacity ramp-up rate may be calculated by using the formula: 1 - (minimum rated capacity/maximum rated capacity). Therefore, the capacity ramp-up rate decreases as the minimum rated capacity is closer to the maximum rated capacity. In this embodiment, the battery capacity is increased, which makes the minimum rated capacity be close to the maximum rated capacity, reducing the capacity ramp-up rate.

At S5, the to-be-activated battery is allowed to stand at the predetermined ambient temperature for a second predetermined duration.

The second predetermined duration may be 5 minutes, 10 minutes, etc.

Specifically, since the temperature of the to-be-activated battery rises subsequent to charging, allowing the to-be-activated battery to stand at the predetermined ambient temperature for the first predetermined duration can eliminate a temperature difference between the surface temperature of the to-be-activated battery subsequent to discharging and the predetermined ambient temperature, thereby reducing the degree of polarization. As the degree of polarization of the battery immediately after charging and discharging is high, the degree of polarization decreases after standing, and the battery becomes closer to the equilibrium potential, so as to improve the activation effect of subsequent steps.

At S6, a preset number of cycles are performed. Each cycle consists of the operation of said performing, at the predetermined ambient temperature, the constant current charging on the to-be-activated battery at the first predetermined current rate until the voltage of the to-be-activated battery reaches the charging cutoff voltage V1 of the to-be-activated battery to the operation of said performing the constant current discharging on the to-be-activated battery at the second predetermined current rate to discharge the electric quantity defined as the predetermined percentage SOC.

The preset number of cycles may be 1, 2, 3, or the like, and may be specifically determined based on compaction density of the positive and negative electrodes and the capacity ramp-up rate of the to-be-activated battery. For example, the preset number of cycles increases as the compaction density of the positive and negative electrodes becomes higher or the capacity ramp-up rate becomes higher.

Specifically, by charging at a smaller current (block S1 to block S3) and discharging at the higher SOC (block S4), the battery capacity of the to-be-activated battery can be quickly activated, eliminating battery capacity ramp-up and increasing the battery capacity. By performing the preset number of cycles each consisting of block S1 to block S5, the preset number of cycles of charging at the smaller current and discharging at the higher SOC is achieved, which improves an effect of lithium ions in the battery deintercalating from the positive electrode and intercalating into the negative electrode, reducing the degree of polarization of the battery. Further, the to-be-activated battery is activated efficiently, allowing the battery to exert its maximum capacity.

In the above-described method for activating the battery capacity, at the predetermined ambient temperature, the constant current charging is performed on the to-be-activated battery at the first predetermined current rate until the voltage of the to-be-activated battery reaching the charging cutoff voltage V1 of the to-be-activated battery, the first predetermined current rate being less than or equal to a maximum continuous charging current C of the to-be-activated battery; the constant voltage charging is performed on the to-be-activated battery at the charging cutoff voltage V1 until the current of the to-be-activated battery reaches the predetermined cutoff current, the predetermined cutoff current being less than or equal to 0.2 times the maximum continuous charging current C of the to-be-activated battery; the to-be-activated battery is allowed to stand at the predetermined ambient temperature for the first predetermined duration; the constant current discharging is performed on the to-be-activated battery at the second predetermined current rate to discharge an electric quantity defined as the predetermined percentage SOC, the second predetermined current rate being less than or equal to the maximum continuous charging current C of the to-be-activated battery, and the predetermined percentage SOC being greater than 90% SOC and less than 100% SOC; and the to-be-activated battery is allowed to stand at the predetermined ambient temperature for the second predetermined duration, and the preset number of cycles are performed, each cycle consists of the operation of said performing, at the predetermined ambient temperature, the constant current charging on the to-be-activated battery at the first predetermined current rate until the voltage of the to-be-activated battery reaches the charging cutoff voltage V1 of the to-be-activated battery to the operation of said performing the constant current discharging on the to-be-activated battery at the second predetermined current rate to discharge the electric quantity defined as the predetermined percentage SOC. By charging the battery to a smaller cutoff current, discharging it to the higher SOC, and performing charge/discharge cycling during a constant voltage charging phase, the lithium ion path in the battery is established, the lithium intercalation sites in the negative electrode are activated, and some inert lithium ions in the positive electrode are activated during the charging and discharging process. Therefore, the degree of polarization of the battery during the charging and discharging process is reduced, an electrode mass transfer kinetics process is improved, the battery capacity ramp-up is eliminated, and the battery capacity is increased.

Further, the predetermined ambient temperature ranges from 20°C to 40°C, and preferably, the predetermined ambient temperature ranges from 25°C to 35°C.

Specifically, the predetermined ambient temperature ranges from 20°C to 40°C, and preferably, the predetermined ambient temperature ranges from 25°C to 35°C. The predetermined ambient temperature is a common temperature in the battery manufacturing process, which avoids the need to repurchase devices, saving costs for activating the battery capacity.

Further, the first predetermined current rate ranges from 0.2C to 1C.

Specifically, the first predetermined current rate ranges from 0.2C to 1C. That is, the first predetermined current rate is less than or equal to the maximum continuous charging current C of the to-be-activated battery, which avoids overcharging the to-be-activated battery and causes no damage to the to-be-activated battery.

It is worth noting that the first predetermined current rate may be flexibly set and adjusted accordingly as desired.

Further, the charging cutoff voltage V1 is 3.65V.

Specifically, the charging cutoff voltage V1 is 3.65V, and the discharging cutoff voltage V2 is 2.5V. In this embodiment, the charging cutoff voltage V1 is determined to facilitate subsequent charging and discharging based on the charging cutoff voltage V1, avoiding overcharging and over-discharging of the to-be-activated battery.

Further, the first predetermined duration is greater than or equal to 5 minutes.

Specifically, the first predetermined duration is greater than or equal to 5 minutes, which ensures a reduction in a temperature difference between a temperature of to-be-activated battery and the predetermined ambient temperature, improving a subsequent activation efficiency of the battery capacity.

It is worth noting that the first predetermined duration may be flexibly set and adjusted accordingly as desired.

Further, the second predetermined current rate ranges from 0.2C to 1C.

Specifically, the second predetermined current rate ranges from 0.2C to 1C. That is, the second predetermined current rate is less than or equal to the maximum continuous charging current C of the to-be-activated battery, which avoids overcharging the to-be-activated battery and causes no damage to the to-be-activated battery.

It is worth noting that the second predetermined current rate may be flexibly set and adjusted accordingly as desired.

Further, the predetermined cutoff current ranges from 0.02C to 0.1C.

Specifically, the predetermined cutoff current ranges from 0.02C to 0.1C. That is, the predetermined cutoff current is relatively small. Therefore, during a constant-voltage charging process, the electric quantity can be increased, which establishes the lithium ion path, activates the lithium intercalation sites in the negative electrode, and activates some inert lithium ions in the positive electrode during the charging process, reducing the degree of polarization of the battery during the charging process.

It is worth noting that the predetermined cutoff current may be flexibly set and adjusted accordingly as desired.

Further, the preset number of cycles ranges from 1 to 3.

Specifically, the preset number of cycles may be 1. That is, the cycle consisting of block S1 to block S5 is performed once. Alternatively, the preset number of cycles may be twice or three times. By performing the cycle consisting of the above-described block S1 to block S5 twice or three times, the effect of lithium ions in the battery deintercalating from the positive electrode and intercalating into the negative electrode is further improved, increasing the battery capacity.

It is worth noting that the preset number of cycles may be flexibly set and adjusted accordingly as desired.

Further, the predetermined percentage SOC is 5% SOC.

Specifically, the predetermined percentage SOC is 5% SOC. That is, the discharged electric quantity accounts for 5% of a rated electric quantity, which is considered as discharging at the high SOC. Therefore, during the discharging process, the electric quantity can be increased, which establishes the lithium ion path, activates the lithium intercalation sites in the negative electrode, and activates some inert lithium ions in the positive electrode, reducing the degree of polarization of the battery during the charging process.

It is worth noting that the predetermined percentage SOC may be flexibly set and adjusted accordingly as desired.

Further, the method for activating the battery capacity further includes, prior to performing, at the predetermined ambient temperature, the constant current charging on the to-be-activated battery at the first predetermined current rate: allowing the to-be-activated battery to stand at the predetermined ambient temperature for a third predetermined duration, to enable a surface temperature of the to-be-activated battery to be close to the predetermined ambient temperature.

The third predetermined duration may be 5 minutes, 10 minutes, etc.

Specifically, the to-be-activated battery is allowed to stand at the predetermined ambient temperature for the third predetermined duration, to enable the surface temperature of the to-be-activated battery to be close to the predetermined ambient temperature, which reduces the temperature difference between the temperature of to-be-activated battery and the predetermined ambient temperature, improving the subsequent activation efficiency of the battery capacity.

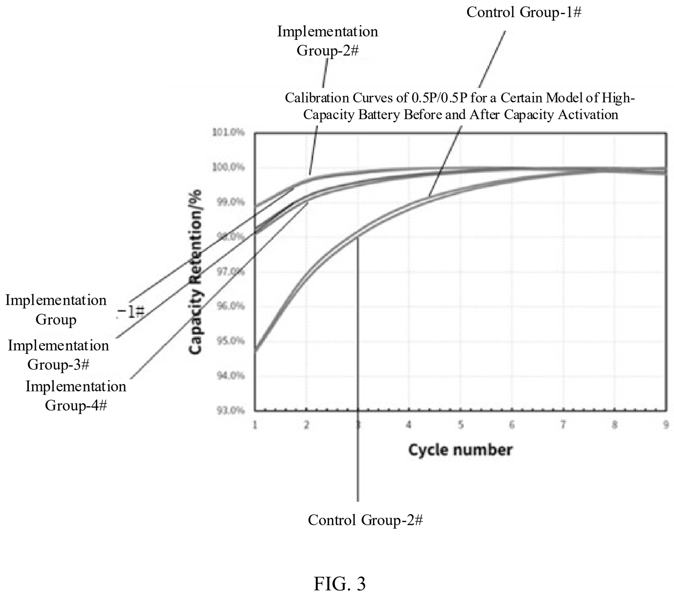

In an example, Table 1 is a data table of multiple groups of capacity ramp-up cycle counts and capacity ramp-up rates for a certain model of high-capacity prismatic lithium iron phosphate battery. FIG. 3 is a schematic diagram of a capacity curve of a certain model of high-capacity prismatic lithium iron phosphate battery. FIG. 3 is a schematic diagram of capacity curves of 6 groups of the certain model of high-capacity prismatic lithium iron phosphate battery in Table 1 under constant power (0.5P), i.e., under the national standard. An abscissa of the capacity curve represents the ramp-up cycle count (marked as Cycle number in the figure), and an ordinate of the capacity curve represents the battery capacity exerted by the certain model of high-capacity prismatic lithium iron phosphate battery, i.e., the capacity retention rate (marked as Capacity Retention% in the figure). Implementation Group-1# and Implementation Group-2# underwent battery capacity activation of the above-described block S1 to block S5 once, resulting in 4 capacity ramp-up cycles and a capacity ramp-up rate of 1%; and Implementation Group-3# and Implementation Group-4# underwent battery capacity activation of the above-described block S1 to block S3, resulting in 8 capacity ramp-up cycles and a capacity ramp-up rate of less than 2%. Batteries in the experimental group can exert more than 99.5% capacity subsequent to 3 cycles, while batteries in the control group had more than 9 capacity ramp-up cycles and a capacity ramp-up rate of more than 5%. As can be seen from Table 2 and FIG. 3, the batteries in the implementation groups had higher initial capacity subsequent to activation. Therefore, the method for activating the battery capacity according to the embodiments of the present disclosure can reduce the battery capacity ramp-up rate and increase the battery capacity.

**Table 1, data table of multiple groups of capacity ramp-up cycle counts and capacity ramp-up rates for a certain model of high-capacity prismatic lithium iron phosphate battery**

| | Group | Capacity ramp-up cycle count | | Capacity ramp-up rate | |
|---|---|---|---|---|---|
| | Implementation Group-1# | | 4 | | 1.12% |
| | Implementation Group-2# | | 4 | | 1.11% |
| | Implementation Group-3# | | 8 | | 1.72% |
| | Implementation Group-4# | | 8 | | 1.88% |
| | Control Group-1# | | More than 9 | | 5.25% |
| | Control Group-2# | | More than 9 | | 5.31% |

To better implement the method for activating the battery capacity according to the embodiments of the present disclosure, based on the method for activating the battery capacity, the embodiments of the present disclosure further provide an apparatus for activating the battery capacity. As illustrated in FIG. 3, the apparatus 200 for activating the battery capacity includes: a first charging module 201 configured to perform, at a predetermined ambient temperature, constant current charging on a to-be-activated battery at a first predetermined current rate until a voltage of the to-be-activated battery reaches a charging cutoff voltage V1 of the to-be-activated battery, the first predetermined current rate being less than or equal to a maximum continuous charging current C of the to-be-activated battery; a second charging module 202 configured to perform constant voltage charging on the to-be-activated battery at the charging cutoff voltage V1 until a current of the to-be-activated battery reaches a predetermined cutoff current, the predetermined cutoff current being less than or equal to 0.2 times the maximum continuous charging current C of the to-be-activated battery; a first standing module 203 configured to allow the to-be-activated battery to stand at the predetermined ambient temperature for a first predetermined duration; a discharging module 204 configured to perform constant current discharging on the to-be-activated battery at a second predetermined current rate to discharge an electric quantity defined as a predetermined percentage SOC, the second predetermined current rate being less than or equal to the maximum continuous charging current C of the to-be-activated battery, and the predetermined percentage SOC being less than 10% SOC; a second standing module 205 configured to allow the to-be-activated battery to stand at the predetermined ambient temperature for a second predetermined duration; and a cycle execution module 206 configured to perform a preset number of cycles each consisting of the operation performed by the first charging module to the operation performed by the second standing module.

Further, the charging cutoff voltage V1 is 3.65V.

Further, the apparatus for activating the battery capacity further includes: a standing module configured to allow the to-be-activated battery to stand at the predetermined ambient temperature for a third predetermined duration, to enable a surface temperature of the to-be-activated battery to be close to the predetermined ambient temperature.

The embodiments of the present disclosure further provide an electronic device that integrates any one of the apparatuses for activating the battery capacity according to the embodiments of the present disclosure. The electronic device includes: one or more processors; a memory; and one or more application programs stored in the memory and configured to be executed by the one or more processors to implement the method for activating the battery capacity in any one of the above-described method embodiments for activating the battery capacity.

The embodiments of the present disclosure further provide an electronic device that integrates any one of the apparatuses for activating the battery capacity according to the embodiments of the present disclosure.

The electronic device may include a processor with one or more processing cores, a memory with one or more computer-readable storage media, a power supply, an input unit, and the like. It can be understood by those skilled in the art that, the structure of the electronic device does not constitute a limitation of the electronic device. Instead, the electronic device may include more or fewer components than those illustrated in the figures, or include a combination of components, or have a different arrangement of components.

The processor, as a control center of the electronic device, can connect respective parts of the electronic device to each other by using various interfaces and wires. By running or executing the software program and/or module stored in the memory, and by calling data stored in the memory, the processor can implement various functions of the electronic device and process the data, to monitor the electronic device. Optionally, the processor may include one or more processing cores. Preferably, the processor may be integrated with an application processor or a modem processor. The application processor can be mainly configured to process an operating system, a user interface, an application program, or the like. The modem processor can be mainly configured to process wireless communication. It should be understood that, the above-described modem controller may not be integrated in the processor.

The memory can be configured to store a software program and module. The processor can execute various functional applications and data processing by running the software program and module stored in the memory. The memory may mainly include a program storage area and a data storage area. The program storage area can be configured to store an operating system, an application program necessary for at least one function (such as a sound playing function, an image playing function, etc.), or the like. The data storage area can be configured to store data produced by use of the electronic device, or the like. In addition, the memory may include a high-speed random-access memory, or a non-volatile memory such as at least one disk memory, a flash memory, or another volatile solid-state memory. Accordingly, the memory may further include a memory controller configured to provide an access of the processor to the memory.

The electronic device may further include the power supply configured to supply power to the respective components. Preferably, the power supply may be logically connected to the processor via a power management system, thereby managing charging, discharging, and power consumption via the power management system. The power supply may further include one or more direct-current power supplies or alternating-current power supplies, rechargeable systems, power supply failure detection circuits, power converters or inverters, power state indicators, or the like.

The electronic device may further include the input unit. The input unit may be configured to receive the inputted numerical digit or character information and to generate a keyboard input, a mouse input, a joystick input, an optical input, or a trackball signal input that is related to a user setup or function control.

Although not illustrated, the electronic device may further include a display unit or the like, which is not described in detail herein.

Specifically, in this embodiment, the processor in the electronic device loads executable documents corresponding to processes of one or more applications into the memory in accordance with the following instructions, and executes the application stored in the memory to implement various functions.

A computer-readable storage medium stores a computer program. The computer program, when executed by a processor, implements the steps in the above-described method for activating the battery capacity.

It is conceivable for those skilled in the art that, all or part of the processes in the above method embodiments may be implemented by relevant hardware instructed by a computer program. The program can be stored in a non-volatile computer-readable storage medium. When the program is executed, steps of the above method embodiments may be included. Any reference to a memory, a storage, a database, or other media as used in the embodiments of the present disclosure may include a non-volatile and/or a volatile memory. The nonvolatile memory may include a Read Only Memory (ROM), a Programmable ROM (PROM), an Electrically Programmable ROM (EPROM), an Electrically Erasable Programmable ROM (EEPROM), or a flash memory. The volatile memory may include a Random Access Memory (RAM) or an external cache memory. By way of illustration, rather than limitation, an RAM is available in various forms such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), a Rambus Direct RAM (RDRAM), a Direct Rambus Dynamic RAM (DRDRAM), and a Rambus Dynamic RAM (RDRAM).

Any combination of technical features in the above-described embodiments may be adopted. To make the description simple, all possible combinations of the technical features in the above-described embodiments are not described. However, as long as there is no contradiction in the combinations of the technical features in the embodiments, all such combinations should be considered in the scope of this specification.

The embodiments of the present disclosure are described in detail above. Specific embodiments are used in the present disclosure to illustrate the principles and implementations of the present disclosure. The description of the above embodiments is only intended to facilitate understanding of the method and its core concepts. Meanwhile, those skilled in the art can make modification specific implementations and change an application scope based on the concepts of the present disclosure. In summary, the contents of the specification shall not be construed as limitations of the present disclosure.

## Claims

1. A method for activating battery capacity, the method comprising:
performing, at a predetermined ambient temperature, constant current charging on a to-be-activated battery at a first predetermined current rate until a voltage of the to-be-activated battery reaches a charging cutoff voltage V1 of the to-be-activated battery, wherein the first predetermined current rate is less than or equal to a maximum continuous charging current C of the to-be-activated battery;
performing constant voltage charging on the to-be-activated battery at the charging cutoff voltage V1 until a current of the to-be-activated battery reaches a predetermined cutoff current, wherein the predetermined cutoff current is less than or equal to 0.2 times the maximum continuous charging current C of the to-be-activated battery;
allowing the to-be-activated battery to stand at the predetermined ambient temperature for a first predetermined duration;
performing constant current discharging on the to-be-activated battery at a second predetermined current rate to discharge an electric quantity defined as a predetermined percentage State of Charge, SOC, wherein the second predetermined current rate is less than or equal to the maximum continuous charging current C of the to-be-activated battery, and wherein the predetermined percentage SOC is less than 10% SOC;
allowing the to-be-activated battery to stand at the predetermined ambient temperature for a second predetermined duration; and
performing a preset number of cycles each consisting of the operation of said performing, at the predetermined ambient temperature, the constant current charging on the to-be-activated battery at the first predetermined current rate until the voltage of the to-be-activated battery reaches the charging cutoff voltage V1 of the to-be-activated battery to the operation of said performing the constant current discharging on the to-be-activated battery at the second predetermined current rate to discharge the electric quantity defined as the predetermined percentage SOC.

2. The method for activating the battery capacity according to claim 1, wherein the predetermined ambient temperature ranges from 20°C to 40°C,
preferably, the predetermined ambient temperature ranges from 25°C to 35°C.

3. The method for activating the battery capacity according to claim 1 or claim 2, wherein the first predetermined current rate ranges from 0.2C to 1C.

4. The method for activating the battery capacity according to claim 1, wherein the charging cutoff voltage V1 is 3.65V.

5. The method for activating the battery capacity according to claim 1, wherein the predetermined cutoff current ranges from 0.02C to 0.1C.

6. The method for activating the battery capacity according to claim 1, wherein the first predetermined duration is greater than or equal to 5 minutes.

7. The method for activating the battery capacity according to claim 1, wherein the second predetermined current rate ranges from 0.2C to 1C.

8. The method for activating the battery capacity according to claim 1, wherein the preset number of cycles ranges from 1 to 3.

9. The method for activating the battery capacity according to claim 1, wherein the predetermined percentage SOC is 5% SOC.

10. The method for activating the battery capacity according to any one of claims 1 to 9, further comprising, prior to said performing, at the predetermined ambient temperature, the constant current charging on the to-be-activated battery at the first predetermined current rate:
allowing the to-be-activated battery to stand at the predetermined ambient temperature for a third predetermined duration, to enable a surface temperature of the to-be-activated battery to be close to the predetermined ambient temperature.

11. An apparatus for activating a battery capacity, the apparatus comprising:
a first charging module configured to perform, at a predetermined ambient temperature, constant current charging on a to-be-activated battery at a first predetermined current rate until a voltage of the to-be-activated battery reaches a charging cutoff voltage V1 of the to-be-activated battery, wherein the first predetermined current rate is less than or equal to a maximum continuous charging current C of the to-be-activated battery;
a second charging module configured to perform constant voltage charging on the to-be-activated battery at the charging cutoff voltage V1 until a current of the to-be-activated battery reaches a predetermined cutoff current, wherein the predetermined cutoff current is less than or equal to 0.2 times the maximum continuous charging current C of the to-be-activated battery;
a first standing module configured to allow the to-be-activated battery to stand at the predetermined ambient temperature for a first predetermined duration;
a discharging module configured to perform constant current discharging on the to-be-activated battery at a second predetermined current rate to discharge an electric quantity defined as a predetermined percentage SOC, wherein the second predetermined current rate is less than or equal to the maximum continuous charging current C of the to-be-activated battery, and wherein the predetermined percentage SOC is less than 10% SOC;
a second standing module configured to allow the to-be-activated battery to stand at the predetermined ambient temperature for a second predetermined duration; and
a cycle execution module configured to perform a preset number of cycles each consisting of the operation performed by the first charging module to the operation performed by the second standing module.

12. The apparatus for activating the battery capacity according to claim 11, wherein the charging cutoff voltage V1 is 3.65V.

13. The apparatus for activating the battery capacity according to claim 11 or claim 12, further comprising:
a standing module configured to allow the to-be-activated battery to stand at the predetermined ambient temperature for a third predetermined duration, to enable a surface temperature of the to-be-activated battery to be close to the predetermined ambient temperature.

14. An electronic device, comprising:
one or more processors;
a memory; and
one or more application programs stored in the memory and configured to be executed by the one or more processors to implement the method for activating the battery capacity according to any one of claims 1 to 10.

15. A computer-readable storage medium, having a computer program stored thereon, wherein the computer program is loaded by a processor, to implement the method for activating the battery capacity according to any one of claims 1 to 10.
